# EUROPÄISCHE PATENTSCHRIFT

(11) **EP 2 429 901 B1**
(45) Veröffentlichungstag und Bekanntmachung des Hinweises auf die Patenterteilung: **20.03.2013**
(21) Anmeldenummer: 10716344.6
(22) Anmeldetag: 03.05.2010
(51) Int. Cl.: B65B 3/04, C08J 3/20

(54) **VERFAHREN ZUR DOSIERUNG VON MASSEN AUF DER BASIS VON ORGANOPOLYSILOXANEN**
METHOD FOR METERING COMPOUNDS ON THE BASIS OF ORGANOPOLYSILOXANES
PROCÉDÉ DE DOSAGE DE MATIÈRES À BASE D'ORGANOPOLYSILOXANES

(30) Priorität: 12.05.2009 DE 102009003044
(43) Veröffentlichungstag der Anmeldung: 21.03.2012
(73) Patentinhaber: Wacker Chemie AG, 81737 München (DE)
(72) Erfinder: SCHÖLEY, Peter, 01665 Diera-Zehren (DE); DINEIGER, Günther, 01662 Meißen (DE); SCHULZ, Stephan, 01309 Dresden (DE)
(74) Vertreter: Budczinski, Angelika
(86) Internationale Anmeldenummer: PCT/EP2010/055975
(87) Internationale Veröffentlichungsnummer: WO 2010/130592

(56) Entgegenhaltungen:
- DE-A1- 3 718 948
- DE-U1-202004 014 083
- US-A1- 2003 041 565
- US-A1- 2009 108 024

## Beschreibung

Die Erfindung betrifft ein Verfahren zur diskontinuierlichen Dosierung von Massen auf der Basis von Organopolysiloxanen, insbesondere von bei Raumtemperatur vernetzbaren Organopolysiloxanmassen.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen oder Acetoxygruppen, tragen. Des Weiteren können diese Dichtmassen Füllstoffe, Weichmacher, Vernetzer, Katalysatoren sowie Additive enthalten. Sehr oft werden hochdisperse Kieselsäuren als Füllstoffe verwendet. Diese werden den RTV1-Dichtmassen in möglichst geringen Mengen zugesetzt, denn bei größeren Anteilen der verstärkenden Füllstoffe werden unerwünscht hohe Zugspannungen schon bei geringen Dehnungen des ausgehärteten Materials erreicht. Die Herstellung von RTV1-Dichtmassen wird beispielsweise in EP-B1-1 884 541 beschrieben. DE-A-3718948 beschreibt eine Vorrichtung zum Umfüllen von plastischen Massen, wie Silikon-Kautschuk.

Üblicherweise werden die RTV1-Dichtmassen nach ihrer Herstellung in Fässer oder sog. Fluid-bags abgefüllt, in denen sie zunächst gelagert werden. Anschließend erfolgt die Abfüllung in anwendungsfertige Gebinde, wie Kartuschen, Schlauchbeutel oder Tuben. Meist werden die RTV1-Dichtmassen zunächst mit einem gewissen Vordruck aus dem Großgebinde gepresst oder gesaugt. Danach nutzt man Förderorgane wie Scheckenpumpen oder Zahnradpumpen.

Die Förderprozesse sind im Allgemeinen technisch sehr anspruchsvoll, denn im Unterschied zu newtonschen Flüssigkeiten weisen die standfesten RTV1-Dichtmassen ein völlig anderes rheologisches Verhalten auf. Insbesondere weisen RTV1-Dichtmassen neben ihrer extrem hohen Viskosität eine Fließgrenze auf, denn sie dürfen bei der Anwendung, zum Beispiel dem Verschließen von Bauwerksfugen, nicht aus senkrechter Fuge heraus fließen.

Damit muss bei jedem Beginn eines Fördervorgangs zunächst die Fließgrenze überwunden werden, bevor sich die hochviskose RTV1-Dichtmasse in der Förderleitung zu bewegen beginnt.

Dies bedeutet, dass ein erheblicher Leistungseintrag in die Mischung über die Förderorgane erfolgt. Dabei ist ein solcher Leistungseintrag sehr nachteilig, denn über die starke mechanische Beanspruchung zumindest des Teiles der Mischung, der sich in den Förderorganen befindet, werden die Strukturen der verstärkenden Füllstoffe abgebaut. Dies kann sogar bis zum Verlust der Standfestigkeit der RTV1-Dichtmasse führen.

Je größer das zu fördernde Volumen ist, desto größer sind auch der Leistungseintrag und die mechanische Beanspruchung der RTV1-Dichtmasse im Förderorgan bei Beginn eines jeden Fördervorganges.

Da sich diese mechanische Beanspruchung im Förderorgan nur auf einen relativ kleinen Teil in Bezug auf das zu fördernde Gesamtvolumen bezieht und auch Rückvermischungsprozesse während des weiteren Fördervorganges stattfinden, kann die Produktschädigung sehr oft toleriert werden, wenn sich daran ein länger dauernder Fördervorgang anschließt.

Völlig anders ist die Situation jedoch, wenn die RTV1-Dichtmassen in Kleingebinde, wie 310-ml-Kartuschen, abgefüllt werden. In diesem Fall kann die Produktschädigung der RTV1-Dichtmasse durch mechanische Beanspruchung dramatisch sein, denn der Fördervorgang wird ständig unterbrochen und muss jedes Mal zur Abfüllung einer Kartusche neu begonnen werden. Insbesondere kann die Produktschädigung sehr stark sein, wenn das Volumen der RTV1-Dichtmasse im Förderorgan größer ist als 310 ml. Dies würde bedeuten, dass ein Teil der Dichtmasse sogar mehrmals mechanisch stark belastet wird. Dies ist insbesondere dann der Fall, wenn wegen gewollt kurzer Dosierzeiten Dosierpumpen mit sehr großem Fördervolumen eingesetzt werden.

Bei einem anderen Verfahren zur Dosierung von RTV1-Dichtmassen an Abfüllmaschinen wird nach dem Dosieren der gewünschten Menge die Dosierleitung ebenfalls verschlossen. Die Dosierpumpe bleibt jedoch dauerhaft in Betrieb und fördert die RTV1-Dichtmasse über einen sogenannten Überströmer zurück in die Leitung vor die Dosierpumpe. Die dadurch verursachte Produktschädigung ist unerwünscht. Sie wird aber noch dadurch verstärkt, dass beispielsweise bei Maschinenstillständen das Umpumpen über den Überströmer über einen längeren Zeitraum betrieben wird.

Weiterhin wirken bei der Abfüllung in Kleingebinde durch die diskontinuierliche Förderung unerwünschte Druckstöße auf die mechanische Ausrüstung der Abfüllvorrichtung. Dadurch ergeben sich kostenintensive Leckageverluste bei Hydraulikölen, Undichtigkeiten bei Übergängen von stabilen Metallrohren zu flexiblen Schlauchleitungen, eine hohe Gefährdung durch große Gasvolumina bei Pneumatikanlagen und ein hoher Geräuschpegel.

Zusätzlich besteht der Nachteil, dass die Abfüllanlagen über längere Zeit still stehen, weil die Gebinde, aus denen dosiert wird, nach der Entleerung gewechselt werden müssen. Diese Stillstandszeiten verkürzen die Maschinenlaufzeiten drastisch.

Gegenstand der Erfindung ist ein Verfahren zur Dosierung von Massen auf der Basis von Organosiliciumverbindungen aus einem im Wesentlichen totraumfreien, volumenstabilen Behälter, aus dem die Masse diskontinuierlich in diskreten Volumen entnommen wird, dadurch gekennzeichnet,
dass vor dem Dosierschritt das errechnete Volumen als mathematisches Produkt aus adiabatischem Kompressibilitätskoeffizienten der geförderten Masse, dem im Behälter am Auslass herrschenden Druck und dem Volumen des Behälters größer ist als das im Dosierschritt entnommene Volumen an Masse.

Bei den erfindungsgemäß eingesetzten Massen handelt es sich bevorzugt um vernetzbare Massen auf der Basis von Organosiloxanen, besonders bevorzugt um bei Raumtemperatur durch Kondensationsreaktion vernetzbare Massen, sogenannte RTV1-Massen, die unter Zutritt von Luftfeuchtigkeit aushärten. Diese werden bevorzugt unter Verwendung von kondensationsfähige Gruppen aufweisenden Siloxanen, Vernetzern, Katalysatoren und gegebenenfalls weiteren Stoffen zubereitet. Ausgangsstoffe und Verfahren zur Zubereitung solcher Massen sind bereits vielfach bekannt. Hierzu sei beispielsweise auf EP-B-512 730 und EP-B-1 397 428 verwiesen, die zum Offenbarungsgehalt der vorliegenden Erfindung zu zählen sind.

So können die Mischungen gemäß ihrer Rezeptur in beliebigen, bevorzugt kontinuierlich arbeitenden Anlagen zubereitet werden, wie zum Beispiel mit Hilfe von Zweischneckenextrudern, Pilgerschrittknetern oder Mischaggregaten mit Rotor/Stator-System.

Bevorzugt bestehen die erfindungsgemäß dosierten Massen überwiegend aus Organosiloxanen, wobei die Massen besonders bevorzugt Organosiloxane in Mengen von 50 bis 99 Gew.-%, insbesondere 60 bis 95 Gew.-%, enthalten.

Bevorzugt werden bei dem erfindungsgemäßen Verfahren die Massen nach ihrer Zubereitung vor dem Eintrag in den Behälter, aus dem sie erfindungsgemäß dosiert werden, mit an sich bekannten Maschinen wie beispielsweise Zweischneckenextruder, Zweiwellen-Kneter oder Pilgerschrittkneter entflüchtigt und entgast. Dies ermöglicht eine problemlose Förderung der Masse und bereitet schon die notwendige blasenfreie Abfüllung in die feuchtigkeitsdichten Gebinde vor.

Im erfindungsgemäßen Verfahren zu dosierende Massen sind vorzugsweise hochviskos mit Viskositäten von bevorzugt über 10 Pa·s, besonders bevorzugt von 100 bis 200 000 Pa·s, jeweils gemessen bei 25°C und einem Schergefälle von 1,0 s⁻¹, und bevorzugt standfest (kein Herauslaufen aus senkrecht aufgehängten Aluminiumprofilen entsprechend ISO 7390).

Die Dichte der erfindungsgemäß zu dosierenden Massen beträgt bevorzugt 0,9 bis 1,8 g/cm³ bei 25°C und 1013 hPa.

In einer bevorzugten Ausführungsform der Erfindung werden RTV1-Dichtmassen auf der Basis von hochviskosen, vernetzbaren Polydimethylsiloxanen eingesetzt.

Im Rahmen des erfindungsgemäßen Verfahrens wird unter Kompressibilitätskoeffizient der Koeffezient verstanden, den die geförderte Masse unter den am Auslass herrschenden Bedingungen aufweist.

Kompressibilitätskoeffizienten und deren Bestimmung sind allgemein bekannt. Hierzu sei z.B. auf Noll, Walter: Chemie und Technologie der Silicone, 2. Auflage 1968, Verlag Chemie GmbH, Weinheim/Bergstr., Seite 404, Lueger, Otto: Lexikon der gesamten Technik und ihrer Hilfswissenschaften, Band 5, Stuttgart und Leipzig, Deutsche Verlags-Anstalt, Seiten 581-583 bzw. D'Ans, Jean und Lax, Ellen: Taschenbuch für Chemiker und Physiker, 2., berichtigte Auflage 1949, Springer-Verlag, Berlin-Göttingen-Heidelberg, Seite 738 verwiesen. Dabei kann der Kompressibilitätskoeffizient der fertigen Masse ermittelt werden oder auch die Kompressibilitätskoeffizienten der Einzelbestandteile entsprechend ihres Anteils am Gesamtvolumen der jeweiligen Masse. Der Kompressibilitätskoeffizient der zu dosierenden Masse richtet sich in erster Linie nach Art und Anteil der eingesetzten Organopolysiloxane. Die gegebenenfalls eingesetzten anderen Mischungsbestandteile, wie Haftvermittler, Katalysatoren, Vernetzer, aber insbesondere Füllstoffe, wie hochdisperses Siliciumdioxid und Calciumcarbonate, oder Fungizide und Farbpigmente, werden im Allgemeinen als nicht oder wenig komprimierbar angesehen und haben einen geringeren Einfluss. Dagegen ist es sinnvoll, organische Weichmacher mit zu berücksichtigen, insbesondere wenn der Anteil dieser Materialien in der Dichtmasse zum Beispiel höher als 1,0 Vol.-% ist.

Der im erfindungsgemäßen Verfahren eingesetzte Behälter, aus dem die Masse dosiert wird, ist bevorzugt mechanisch stabil sowie luft- und feuchtigkeitsdicht abgeschlossen. Die erfindungsgemäße Ausführungsform des Behälters in mechanisch stabiler Bauart bedeutet, dass Werkstoffe, wie Stahl oder Aluminium, bevorzugt sind. Möglich sind auch Versteifungen, beispielsweise aus Beton. Ziel der mechanisch stabilen Ausführungsform sind insbesondere der Ausschluss von Luftfeuchtigkeit, da eindringende Luftfeuchtigkeit Produktschädigungen bewirken würde, und ein hoher Widerstand gegen Verformung des Behälters.

Der erfindungsgemäß eingesetzte Behälter ist bei den herrschenden Drücken und Temperaturen volumenstabil. Volumenstabil im Sinne der Erfindung heißt, dass seine Volumenzunahme durch Anlegen des Arbeitsdrucks maximal 9 % des diskreten Fördervolumens beträgt. Weiterhin bedeutet volumenstabil, dass sich die thermische Ausdehnung des Behälters nur langfristig über mehrere Minuten oder Stunden verändert und somit nicht zur Beeinflussung des Druckes im Behälter zur Realisierung stetig wiederkehrender Dosiervorgänge genutzt werden kann.

Der erfindungsgemäß eingesetzte Behälter kann jede beliebige geometrische Form aufweisen, bevorzugt werden kugelförmige oder zylindrische Formen, besonders bevorzugt zylindrische. Die Querschnitte können rechteckig, rund oder oval sein. Besonders bevorzugt werden kreisrunde Querschnitte.

Des Weiteren werden innere Maße des Behälters bevorzugt, die ein großes Oberflächen zu Speichervolumen - Verhältnis gewährleisten. Das heißt, der Behälter sollte beispielsweise bei zylindrischer Form sehr dünn und lang sein. Bevorzugt hat der Quotient aus Länge und Durchmesser des erfindungsgemäß eingesetzten Behälters Werte von 1 bis 10 000, besonders bevorzugt von 1 bis 1 000. Es kann dabei von Vorteil sein, wenn der zylindrische Behälter Krümmungen aufweist. Dies ist zum Beispiel dann sinnvoll, wenn eine kontinuierlich arbeitende Anlage zur Zubereitung der vernetzbaren Masse und eine Anlage zur Abfüllung der Masse in Kleingebinde örtlich nebeneinander aufgebaut sind.

Durch die bevorzugte Verwendung von Rohrleitungen mit geringem Durchmesser als Behälter wird eine Art Pfropfenströmung gewährleistet, wodurch die mittlere Verweilzeit der Masse im Behälter kurz ist.

Der Behälter kann auch aus mehreren Bauteilen bestehen, die vorgefertigt sein können und beliebig zusammengesetzt werden, z.B. durch Verschraubung oder Verschweißen. Die Dichtungen zwischen diesen Bauteilen sind bevorzugt so gewählt, dass sie den thermischen und chemischen Belastungen standhalten, das heißt, dass sie insbesondere beständig sind gegen die Bestandteile der eingesetzten Massen.

Beim erfindungsgemäßen Verfahren ist der Innendruck des im Wesentlichen totraumfreien Behälters dauerhaft mindestens 5 000 hPa, bevorzugt mindestens 10 000 hPa, besonders bevorzugt 10 000 bis 60 000 hPa.

Unter Toträumen werden Volumenelemente im Behälter verstanden, die nicht mit Siloxanmasse gefüllt sind, sondern beispielsweise Gaseinschlüsse sind. Im Rahmen der vorliegenden Erfindung soll unter der Bezeichnung "im Wesentlichen totraumfrei" auch die Anwesenheit von Gaseinschlüssen in untergeordnetem Maße, die im technischen Betrieb nie vollständig auszuschließen sind, verstanden werden, wobei der Anteil an Volumenelementen Gas bevorzugt maximal 0,1 Vol.-%, besonders bevorzugt maximal 0,05 Vol.-%, insbesondere maximal 0,01 Vol.-%, jeweils bezogen auf die Volumenelemente der Masse im Behälter, beträgt.

Bevorzugt sind die erfindungsgemäß verwendeten Leitungen aus hochlegierten, korrosionsbeständigen Stählen angefertigt, wie zum Beispiel Stahl der Werkstoffnummer 1.4301 oder, was besonders bevorzugt ist, Stahl der Werkstoffnummer 1.4571 entsprechend der DIN 17007.

Der Volumenstrom an Masse, vorzugsweise Siloxanmasse, in den Behälter, aus dem erfindungsgemäß dosiert werden soll, beträgt bevorzugt mehr als 200 Liter je Stunde, besonders bevorzugt 500 bis 5000 Liter je Stunde, insbesondere 800 bis 3000 Liter je Stunde.

Der erfindungsgemäß eingesetzte Behälter weist bevorzugt ein Volumen von mindestens 250 Litern auf, besonders bevorzugt von 250 bis 2000 Litern, insbesondere 500 bis 1500 Litern.

Bevorzugt sind keine inneren oder äußeren Temperiervorrichtungen angeordnet.

Es können jedoch dynamische oder statische Mischer oder Mischelemente im Behälter angeordnet sein, um beispielsweise flüssige oder pastöse Stoffe einzumischen. Wenn ein solcher Mischprozess durchgeführt werden soll, dann werden die Mischer oder Mischelemente bevorzugt kurz vor der Austrittsöffnung angeordnet.

Der Behälter ist mit einer Eintrittsöffnung und einer Austrittsöffnung für die Masse ausgerüstet. Es kann einen Druckgradient zwischen Eintritts- und Austrittsöffnung im Behälter geben, was bevorzugt ist. Falls im Behälter zwischen Eintritts- und Austrittsöffnung ein Druckgradient existiert, beträgt dieser bevorzugt maximal 50 000 hPa, besonders bevorzugt 2 000 bis 30 000 hPa, wobei der Druck an der Eintrittsöffnung bevorzugt größer ist als an der Austrittsöffnung. Zur Berechnung des komprimierten Volumens wird der Druck unmittelbar vor der Austrittsöffnung berücksichtigt.

Bei dem erfindungsgemäßen Verfahren wird der Behälter in einem Temperaturbereich von -20 bis 150°C, bevorzugt bei 10 bis 60°C, betrieben.

Bei dem erfindungsgemäßen Verfahren werden die bevorzugt kontinuierlich zubereiteten Mischungen kontinuierlich über geschlossene Leitungssysteme durch eine Eintrittsöffnung dem erfindungsgemäß eingesetzten Behälter zugeführt, bevorzugt mit Hilfe einer Fördereinrichtung, wie einer Zahnradpumpe.

Zur stetigen Nachfüllung des Behälters können aber auch die verschiedensten Vorlagebehälter wie Kübel, Fluid-bags oder Tankcontainer eingesetzt werden.

Besonders bevorzugt wird die Zuführung der Massen unterstützt durch die Verwendung einer Speichervorrichtung, wie sie in DE-A1-10 2007 002 379 beschrieben ist, die zum Offenbarungsgehalt der vorliegenden Anmeldung zu zählen ist. Denn dadurch ist gewährleistet, dass vor dem Förderorgan stets ein ausreichend hoher Vordruck herrscht, um die Masse in das Förderorgan hinein zu drücken.

Zur Förderung der Masse in den erfindungsgemäßen Behälter können alle bekannten druckaufbauenden Aggregate, wie z.B. Extruder oder Pumpen, verwendet werden. Bevorzugt sind Zahnradpumpen.

Die Eintrittsöffnung in den Behälter ist bevorzugt kreisförmig. Sie weist bevorzugt eine Größe (als maximaler Durchmesser) von maximal 200 cm auf, wobei eine Größe von 3 bis 50 cm besonders bevorzugt ist.

Oftmals ist es sinnvoll, Siebe vor der Förderleitung einzubauen, wie z.B. sogenannte Strainer. Damit können gegebenenfalls vorhandene größere Füllstoffteilchen oder grobe Verunreinigungen aus dem Mischgut entfernt werden.

Die Austrittsöffnung ist bevorzugt ein Verschluss am Ende des Behälters entlang der Fließrichtung der Siliconmasse, wie zum Beispiel ein Kugelhahn oder ein Kolbenventil. Dieser Verschluss wird bevorzugt elektronisch gesteuert kurzzeitig so lange geöffnet, bis das zu dosierende Volumen aus dem Behälter entnommen ist. Die Masse kann dabei direkt in Kleingebinde dosiert werden. Das entnommene Volumen kann aber auch unter Einwirkung geringer Drücke und Scherkräfte, beispielsweise durch Verwendung eines Dosierkolbens, in die vorgesehenen Kleingebinde wie Tuben, Kartuschen oder Schlauchbeutel geschoben werden.

Das erfindungsgemäß zu dosierende Volumen entspricht der Abfüllmenge in das Kleingebinde, wie z.B. 600 ml bei sogenannten Schlauchbeuteln, 310 ml bei PE-Kartuschen oder 80 ml bei Aluminium-Tuben.

Ein wichtiges Kennzeichen des erfindungsgemäßen Verfahrens besteht darin, dass die Siliconmasse kontinuierlich in den Behälter gefördert wird und parallel dazu diskontinuierlich in diskreten Mengen entnommen wird.

Dabei liegt in der kontinuierlichen Zuführung des Materials ein großer Vorteil, denn eine starke mechanische Belastung eines sog. Stop-and-go-Verfahrens wird vermieden.

Das erfindungsgemäße Verfahren hat auch den Vorteil, dass es über längere Zeiträume, wie mehrere Stunden oder Tage, ohne Unterbrechung betrieben werden kann, wodurch die zeitliche Auslastung der Abfüllanlagen sehr hoch ist.

Weiterhin hat das erfindungsgemäße Verfahren den Vorteil, dass es im Behälter nicht zu vorzeitigen Produktaushärtungen kommen kann.

Das erfindungsgemäße Verfahren hat den Vorteil, dass auch Massen mit sehr kurzer Hautbildungszeit abgefüllt werden können.

Das erfindungsgemäße Verfahren hat den Vorteil, dass kein Personal benötigt wird, um einen Wechsel der Vorlagebehälter vorzunehmen.

Das erfindungsgemäße Verfahren hat den Vorteil, dass es ohne Unterbrechungen über einen langen Zeitraum betrieben werden kann.

Das erfindungsgemäße Verfahren hat den Vorteil, dass die Massen ohne Rückstände und Abfälle abgefüllt werden können.

Das erfindungsgemäße Verfahren hat den Vorteil, dass keine Druckstöße an der Abfüllanlage auftreten.

Das erfindungsgemäße Verfahren hat den Vorteil, dass es mit sehr geringem mechanischem Aufwand betrieben werden kann.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1

In einem kontinuierlich arbeitenden Zweischneckenextruder wurden 1 200 Liter/Stunde einer transparenten, feuchtigkeitsempfindlichen und standfesten RTV1-Dichtmasse mit einer Dichte von 1,02 g/cm³, die unter Abspaltung von Essigsäure aushärtet, zubereitet (Mischung aus 66,95 Gew.-% eines Polydimethylsiloxans, das Diacetoxymethylsilylendgruppen und Diacetoxyvinylsilylendgruppen im Verhältnis 1:2 aufwies, mit einer Viskosität von 80000 mPas, 22,0 Gew.-% eines α,ω-Bis-trimethylsiloxypolydimethylsiloxans mit einer Viskosität von 1000 mPas, 4,5 Gew.-% eines Gemisches aus Acetoxysilanen, 0,05 Gew.-% einer Mischung aus 20 Gew.-% Dibutylzinndiacetat und 80 Gew.-% organischem Weichmacher sowie 6,5 Gew.-% einer pyrogenen Kieselsäure mit einer BET-Oberfläche von 150 m²/g). Die RTV1-Dichtmasse wurde anschließend kontinuierlich entgast, auf ca. 40°C abgekühlt und mit Hilfe einer Zahnradpumpe durch ein geschlossenes Leitungssystem von unten über die Bodenöffnung in eine leere Speichervorrichtung mit einem maximalen Inhalt von 900 Litern gedrückt.

Diese Speichervorrichtung stand unter einem ständigen Druck von ca. 9 000 hPa, was als Vordruck ausreichte, um einer nur wenige Meter nach dem Speicherbehälter angeordneten Zahnradpumpe die Dichtmasse über eine weitere Rohrleitung zuzuführen. Mit Hilfe dieser Zahnradpumpe wird die RTV1-Dichtmasse bei einem Druck von 25 000 hPa durch eine runde Eintrittsöffnung von 8,4 cm Durchmesser in einen zylindrischen Behälter gedrückt. An der Austrittsöffnung dieses Behälters wurde ein Druck von 12 000 hPa und eine Temperatur von 37°C gemessen.

Der Behälter, aus dem erfindungsgemäß heraus dosiert wird, ist eine Rohrleitung mit einer Länge von 65 Meter und einem Innendurchmesser von 16,0 cm. Dabei war die Rohrleitung aus baulichen Gegebenheiten 6 Mal gekrümmt (Rohrbögen aus geschweißtem Rohr nach DIN 17457, Material 1.4571, Bauart 10 ). Die Wandung des Behälters bestand aus 4 mm dickem Edelstahl (Material 1.4571, Ausführung nach DIN EN 10217. Der Behälter war mit einem Ventil als Auslassöffnung verschlossen, dessen offener Querschnitt 20 cm² betrug.

Aus den genannten Maßen errechnet sich ein Volumen des Behälters von 1,311 m³, das bei dem anliegenden Druck am Anfang der Leitung von 25 000 hPa und am Ende der Leitung von 12 000 hPa als volumenkonstant zu betrachten ist.

Der adiabatische Kompressibilitätskoefizient der eingesetzten Masse bei 37°C und 12 000 hPa betrug 0,90·10⁻⁹ m²/N.

Damit ergibt sich ein mathematisches Produkt aus wirksamem Volumen, adiabatischem Kompressibilitätskoeffizienten und Druck an der Austrittsöffnung von 1,41 Litern.

Es wurden mit jedem Dosierschritt 310 ml der RTV1-Dichtmasse entnommen. Das errechnete Volumen von 1,41 Litern als mathematisches Produkt aus adiabatischem Kompressibilitätskoeffizienten der geförderten RTV1-Dichtmasse, dem im Behälter an der Austrittsöffnung herrschenden Druck und dem Volumen des Behälters ist somit größer als das im einzelnen Dosierschritt entnommene Volumen an RTV1-Dichtmasse.

Das entnommene Volumen von 310 ml wurde in einer Kartuschenabfüllanlage mit Hilfe eines Dosierkolbens in eine Polyethylenkartusche geschoben. Dabei ermöglichte die Verwendung einer sogenannte Doppelkopfmaschine eine sehr hohe Abfüllleistung.

Jeder einzelne, volumetrisch gesteuerte Dosiervorgang dauerte 0,5 Sekunden. Anschließend blieb der Behälter am Austritt 0,5 Sekunden geschlossen.

Die Kapazität der Abfüllanlage betrug somit 28 800 Kartuschen pro 8 Stunden.

Während der gesamten 8 Stunden wurde dem Behälter unter den genannten Betriebsbedingungen kontinuierlich 18,6 Liter pro Minute neues Material zugeführt.

Der Betrieb der Anlage verlief über mehrere Stunden störungsfrei. Es wurden keine Druckstöße beobachtet.

### Beispiel 2

Das Beispiel 1 wurde unter den gleichen Bedingungen mit der Abänderung wiederholt, dass eine RTV1-Dichtmasse mit folgender Zusammensetzung verwendet wurde (Dichte: 0,98 g/cm³):
Mischung aus 65,6 Gew.-% eines Polydimethylsiloxans, das Diacetoxymethylsilylendgruppen und Diacetoxyvinylsilylendgruppen im Verhältnis 1:2 aufwies, mit einer Viskosität von 80000 mPas, 23,8 Gew.-% eines Kohlenwasserstoffgemischs mit einer kinematischen Viskosität von 6,2 mm²/s bei 40°C, einer Viskositäts-Dichte-Konstante von 0,79 und einem Siedebereich von 300 bis 370°C, 2,8 Gew.-% eines Gemisches aus Acetoxysilanen, 0,05 Gew.-% einer Mischung aus 20 Gew.-% Dibutylzinndiacetat und 80 Gew.-% organischem Weichmacher sowie 7,5 Gew.-% einer pyrogenen Kieselsäure mit einer BET-Oberfläche von 150 m²/g und 0,25 Gew-% eines Polyalkylenglykols mit einer Molmasse von ca. 600 g.

Der adiabatische Kompressibilitätskoeffizient der eingesetzten Masse bei 37°C und 12 000 hPa betrug 0,89·10⁻⁹ m²/N. Damit ergibt sich ein mathematisches Produkt aus wirksamem Volumen des Behälters, adiabatischem Kompressibilitätskoeffizienten und Druck an der Austrittsöffnung von 1,39 Litern, was wiederum größer ist als das jeweils entnommene Volumen von 0,31 Liter.

## Patentansprüche

1. Verfahren zur Dosierung von Massen auf der Basis von Organosiliciumverbindungen aus einem im Wesentlichen totraumfreien, volumenstabilen Behälter, aus dem die Masse diskontinuierlich in diskreten Volumen entnommen wird, **dadurch gekennzeichnet, dass** vor dem Dosierschritt das errechnete Volumen als mathematisches Produkt aus adiabatischem Kompressibilitätskoeffizienten der geförderten Masse, dem im Behälter am Auslass herrschenden Druck und dem Volumen des Behälters größer ist als das im Dosierschritt entnommene Volumen an Masse.

2. Verfahren gemäß Anspruch 1, **dadurch gekennzeichnet, dass** es sich bei den Massen um vernetzbare Massen auf der Basis von Organosiloxanen handelt.

3. Verfahren gemäß Anspruch 2, **dadurch gekennzeichnet, dass** die Massen Organosiloxane in Mengen von 50 bis 99 Gew.-% enthalten.

4. Verfahren gemäß einem oder mehreren der Ansprüche 1 bis 3, **dadurch gekennzeichnet, dass** die Massen hochviskos mit Viskositäten von über 10 Pa·s sind, gemessen bei 25°C und einem Schergefälle von 1,0 s⁻¹.

5. Verfahren gemäß einem oder mehreren der Ansprüche 1 bis 4, **dadurch gekennzeichnet, dass** es sich bei dem Behälter um eine Rohrleitung mit geringem Durchmesser handelt.

6. Verfahren gemäß einem oder mehreren der Ansprüche 1 bis 5, **dadurch gekennzeichnet, dass** der Behälter ein Volumen von mindestens 250 Litern aufweist.

7. Verfahren gemäß einem oder mehreren der Ansprüche 1 bis 6, **dadurch gekennzeichnet, dass** der Innendruck des im Wesentlichen totraumfreien Behälters dauerhaft mindestens 5 000 hPa ist.

## Claims

1. Method for metering compositions based on organosilicon compounds from a container which is substantially free of dead space and stable in volume and from which the composition is taken off discontinuously in discrete volumes, **characterized in that**, before the metering step, the calculated volume as a mathematical product of adiabatic compressibility coefficient of the composition transported, the pressure prevailing in the container at the outlet and the volume of the container is greater than the volume of composition taken off in the metering step.

2. Method according to Claim 1, **characterized in that** the compositions are crosslinkable compositions based on organosiloxanes.

3. Method according to Claim 2, **characterized in that** the compositions contain organosiloxanes in amounts of 50 to 99% by weight.

4. Method according to one or more of Claims 1 to 3, **characterized in that** the compositions are highly viscous having viscosities of greater than 10 Pa·s, measured at 25°C and a shear rate of 1.0 s⁻¹.

5. Method according to one or more of Claims 1 to 4, **characterized in that** the container is a pipe of low diameter.

6. Method according to one or more of Claims 1 to 5, **characterized in that** the container has a volume of at least 250 litres.

7. Method according to one or more of Claims 1 to 6, **characterized in that** the internal pressure of the container that is substantially free of dead space is permanently at least 5000 hPa.

## Revendications

1. Procédé pour le chargement dosé de compositions à base de composés organosiliciés à partir d'un récipient essentiellement exempt d'espaces morts, de volume constant, duquel la matière est prélevée en volumes distincts, en mode discontinu, **caractérisé en ce qu'**avant l'étape de chargement dosé le volume déterminé par calcul en tant que produit mathématique du coefficient de compressibilité adiabatique de la composition transportée, de la pression régnant à la sortie dans le récipient et du volume du récipient est supérieur au volume de composition prélevé dans l'étape de chargement dosé.

2. Procédé selon la revendication 1, **caractérisé en ce que** les compositions consistent en des compositions réticulables à base d'organosiloxanes.

3. Procédé selon la revendication 2, **caractérisé en ce que** les compositions contiennent des organosiloxanes en quantités de 50 à 99 % en poids.

4. Procédé selon une ou plusieurs des revendications 1 à 3, **caractérisé en ce que** les compositions sont très visqueuses, avec des viscosités de plus de 10 Pa.s, mesurées à 25 °C et à une vitesse de cisaillement de 1,0 s⁻¹.

5. Procédé selon une ou plusieurs des revendications 1 à 4, **caractérisé en ce que** le récipient consiste en un conduit tubulaire de faible diamètre.

6. Procédé selon une ou plusieurs des revendications 1 à 5, **caractérisé en ce que** le récipient présente un volume d'au moins 250 litres.

7. Procédé selon une ou plusieurs des revendications 1 à 6, **caractérisé en ce que** la pression interne du récipient essentiellement exempt d'espaces morts est en permanence d'au moins 5 000 hPa.
